Europäisches Patentamt

European Patent Office

Office européen des brevets

(19)

(11) Veröffentlichungsnummer: **0 139 067**
**B1**

(12) **EUROPÄISCHE PATENTSCHRIFT**

(45) Veröffentlichungstag der Patentschrift:
07.01.88

(21) Anmeldenummer: 83810494.1

(22) Anmeldetag: 27.10.83

(51) Int. Cl.⁴: **G 01 L 5/00,** G 01 L 5/08,
G 01 L 5/10

(54) Verfahren und Vorrichtung zur Überprüfung der Vorspannung einer Innentrennscheibe.

(43) Veröffentlichungstag der Anmeldung:
02.05.85 Patentblatt 85/18

(45) Bekanntmachung des Hinweises auf die Patenterteilung:
07.01.88 Patentblatt 88/1

(84) Benannte Vertragsstaaten:
CH DE FR GB IT LI NL

(56) Entgegenhaltungen:
EP - A - 0 046 381
DE - A - 2 926 627
DE - B - 1 204 427
DE - B - 1 573 831

Sonderdruck der Siltec Corporation, Menlo Park, California 94025 (US) ca. 1980 G.F. Fiegl and A.C. Bonora "Low Cost Monocristalline Silicon Sheet Fabrication For Solar Cells By Advanced Ingot Technology" seiten 1 bis 6

(73) Patentinhaber: Maschinenfabrik Meyer & Burger AG,
Alte Bernstrasse 146a, CH-3613 Steffisburg (CH)

(72) Erfinder: Zöbeli, Armin, Aumattweg 46,
CH-3613 Steffisburg (CH)
Erfinder: Stauffer, Alfred, Haldeneggweg 4,
CH-3612 Steffisburg (CH)

(74) Vertreter: Steiner, Martin et al, c/o AMMANN PATENTANWAELTE AG BERN Schwarztorstrasse 31,
CH-3001 Bern (CH)

EP 0 139 067 B1

## Beschreibung

Trennmaschinen mit rasch rotierenden Innentrennscheiben werden eingesetzt zum Trennen harter Materialien, beispielsweise Silicium. Es wird dabei neben einer hohen Schnittleistung auch hohe Präzision verlangt, und damit möglichst wenig Material durch den Trennvorgang verlorengeht, werden sehr dünne Trennscheiben verwendet, wobei die Dicke der Scheibe beispielsweise 0,1 bis 0,20 mm beträgt. Es ist daher eine genügende Vorspannung der Innentrennscheibe erforderlich, damit sie die gewünschte Stabilität aufweist, um bei angemessenem Schnittdruck, unter der Wirkung der Zentrifugalkräfte, und unter der Wirkung der Schnittkräfte, nicht unzulässig verformt zu werden. Es ist daher auch wichtig, periodisch zu überprüfen, ob die erforderliche Vorspannung noch vorhanden ist.

Bisher wurde zu diesem Zwecke in der Weise vorgegangen, dass man möglichst nahe am Innenrand der Trennscheibe einen Messtaster anlegt und dann in der Nähe der Messstelle mittels einer Federwaage einen bestimmten Druck quer zur Trennscheibe ausübt. Beim Erreichen einer bestimmten am Messtaster abgelesenen Auslenkung der Trennscheibe wird an der Federwaage die Kraft abgelesen, und diese Kraft stellt ein Mass für die Vorspannung der Innentrennscheibe dar. Bei ungenügender Vorspannung kann die Trennscheibe nachgespannt bzw. ersetzt werden. Dieses Vorgehen hat verschiedenste Nachteile. Der Hauptnachteil besteht darin, dass eine Überprüfung der Vorspannung nur bei stehender Trennscheibe möglich ist. Zur Überprüfung muss also in jedem Falle die Maschine abgestellt werden, was einen relativ langen Arbeitsunterbruch bedingt. Die Messung ist mit Fehlern behaftet. Es ist schwierig, von Hand einen wirklich genau bestimmten konstanten Druck auf die Trennscheibe auszuüben und zugleich sowohl die Auslenkung als auch die Kraft an den beiden Instrumenten abzulesen. Wenn die relative Lage der Messstelle und des Kraftangriffs nicht immer genau übereinstimmen, ist die Messung verfälscht. Die Überprüfung ist also stark von der Geschicklichkeit und Zuverlässigkeit der diese Überprüfung vornehmenden Person abhängig.

Ziel vorliegender Erfindung ist es, eine zuverlässige Überprüfung der Vorspannung der Innentrennscheibe auch bei rotierender Trennscheibe zu ermöglichen. Dieses Ziel wird dadurch erreicht, dass die Kraft berührungslos ausgeübt und die Auslenkung berührungslos gemessen wird, derart, dass die Überprüfung bei rotierender Trennscheibe erfolgen kann. Vorzugsweise kann die Kraft mittels eines aus einer Düse gegen die Trennscheibe strömenden Medium oder mit Hilfe eines auf die Trennscheibe wirkenden Magneten erzeugt werden. Erfindungsgemäss werden sowohl die Mittel zum berührungslosen Anlegen einer Kraft an die Trennscheibe quer zu deren Ebene als auch die Mittel zur Messung der Auslenkung der Trennscheibe unter der Einwirkung der Kraft ortsfest an der Trennmaschine angeordnet. Die gegenseitige Lage von Kraftangriffsstelle und Messstelle ist damit fest vorgegeben. Die Kraftangriffsstelle und Messstelle liegen vorzugsweise auf ein und derselben Seite der Trennscheibe, und zwar auf derjenigen Seite, die einen einfachen Wechsel der Trennscheibe ermöglicht. Es ist aber auch möglich, die Krafteinwirkung und Messung auf gegenüberliegenden Seiten der Trennscheibe vorzunehmen. Die Auslegung kann so getroffen werden, dass eine vorgegebene Kraft ausgeübt wird. Zur Bestimmung des Vorspannungszustandes braucht man dann nur noch die gemessene Auslenkung abzulesen, aus welcher man auf die Vorspannung schliessen kann. Das Messgerät kann natürlich auch direkt in Vorspannungswerten geeicht sein. Es ist eine laufende Überwachung durch periodische Messung möglich, jeweils, wenn die Trennscheibe ausserhalb des Werkstückes ist. Wenn die ermittelte Vorspannung einen bestimmten kritischen Wert unterschreitet, kann eine besondere Anzeige oder ein Alarm ausgelöst werden, womit angezeigt wird, dass vor dem nächsten Trennvorgang die Trennscheibe nachgespannt, bzw. ersetzt werden muss.

Es ist zwar bekannt, Verformungen einer rotierenden Trennscheibe aus ihrer Ebene, bedingt durch Schnittkräfte, durch einen Fühler dauernd zu überwachen und die Trennscheibe dadurch in einer Mittellage zu halten, dass je nach Verformung auf beiden Seiten der Scheibe angeordnete Düsen entsprechend mit Druckluft beschickt werden, um die festgestellte Verformung zu korrigieren (G.F. Fiegl and A.C. Bonora, Sonderdruck Siltec Corporation, Merlo Park, USA, Seite 5). Während also hier die Aufgabe vorliegt, Verformungen zu vermeiden, sollen erfindungsgemäss Verformungen sogar bewusst erzeugt werden zwecks Ermittlung des Vorspannzustandes der Trennscheibe. Die bekannte Anordnung ist nur während des Schnittvorgangs wirksam, wenn sich die Trennscheibe im Werkstück befindet. Die anmeldungsgemässe Anordnung gelangt dagegen normalerweise bei aus dem Werkstück ausgerückter Trennscheibe zum Einsatz, um die Vorspannung der Trennscheibe zu überprüfen.

Die Erfindung wird nun anhand der Zeichnung näher erläutert, die ein Ausführungsbeispiel und Ausführungsvarianten darstellt.

Figur 1 zeigt ein Gesamtschema des Ausführungsbeispiels,

Figur 2 zeigt schematisch die relative Lage von Trennscheibe, Werkstücke, Düse und Sensor,

Figur 3 zeigt die Aufhängung der Vorrichtung an der Trennmaschine,

Figur 4 zeigt die Düse zur Erzeugung eines Druckes auf die Trennscheibe, teilweise im Schnitt,

Figur 5 ist ein Diagramm zur Darstellung des Druckes auf die Trennscheibe in Funktion des Druckes in der Zuleitung zur Düse,

Figur 6 zeigt eine Ausführungsvariante mit magnetischer Krafteinwirkung, und

Figur 7 zeigt eine Variante mit kombinierter pneumatischer Druckerzeugung und Messung.

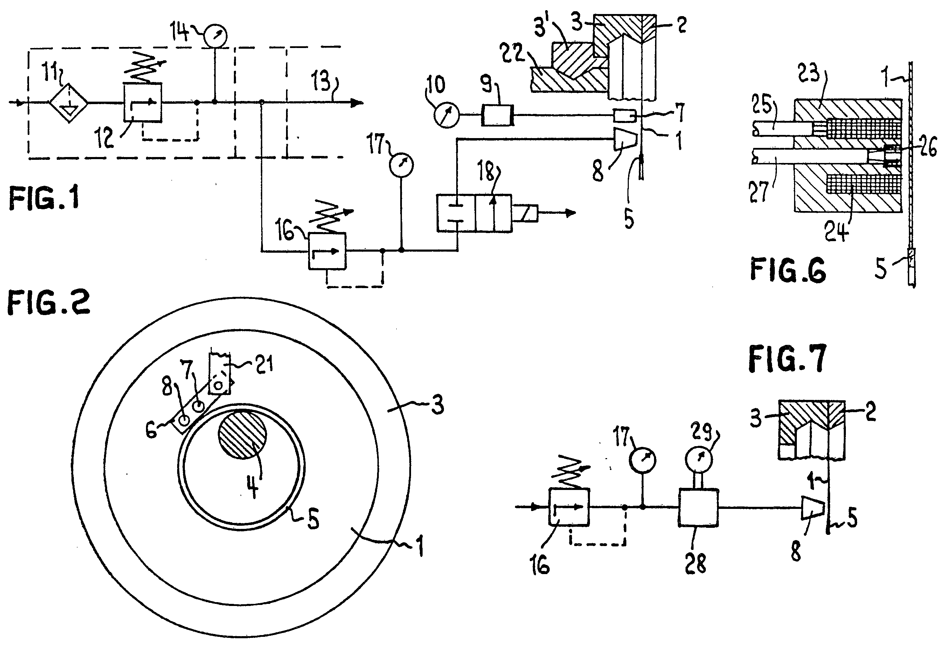

Figur 1 zeigt die Innentrennscheibe 1, die zwischen einem Ring 2 und einem topfförmigen Rotor 3 eingespannt ist. Der Rotor 3 ist mittels eines Lagerringes 3' am Teil 22 gelagert. Tatsächlich ist die Einspannung des äusseren Randes der Trennscheibe 1 wesentlich umständlicher als Figur 1 erkennen lässt, wobei Mittel vorgesehen sind, welche es erlauben, die Trennscheibe 1 gleichmässig radial nach aussen vorzuspannen, und die Scheibe beim Absinken der Vorspannung nachzuspannen. Figur 2 zeigt ein in Figur 1 nicht dargestelltes Werkstück 4, welches mittels eines nicht dargestellten Werkstückträgers gegen den Rand der Innentrennscheibe 1 zugestellt wird, worauf das Werkstück durch einen Diamantbelag 5 am Innenrand der Trennscheibe 1 getrennt wird.

Im Abstand von der Bearbeitungsstelle, bzw. vom Werkstück 4 befinden sich an einem Tragarm 6 ein Sensor oder Geber 7 zur Messung des Abstandes der Trennscheibe 1 von diesem Sensor sowie eine Düse 8, aus welcher Druckluft gegen die Trennscheibe 1 geblasen werden kann, um auf dieselbe eine Querkraft auszuüben. Bei der dargestellten Anordnung der Messvorrichtung ist ein Auswechseln der Trennscheibe ohne Behinderung durch die Messvorrichtung möglich, indem der Ring 2 abgeschraubt, die unbrauchbar gewordene Trennscheibe entfernt, eine neue eingesetzt und der Ring 2 wieder montiert und die erforderliche Vorspannung erzeugt wird. Der Sensor 7 und die Düse 8 können aber auch auf der anderen Seite des topfförmigen Rotors 3 bzw. der Trennscheibe, z.B. an einem dort befindlichen, nicht dargestellten wegschwenkbaren Deckel angeordnet sein. Es ist schliesslich auch möglich, den Sensor 7 und die Düse 8 auf entgegengesetzten Seiten der Trennscheibe, vorzugsweise direkt gegenüberliegend anzuordnen. Der Sensor 7 ist beispielsweise als berührungsloser Wegaufnehmer ausgebildet, welcher nach dem Wirbelstrom-Messprinzip arbeitet und mit einer Messschaltung 9 verbunden ist, welche einen Oszillator zur Speisung des Sensors 7 sowie eine Auswertungsschaltung, beispielsweise einen Demodulator mit Linearisierung und Verstärkung, aufweist. Die Schaltung 9 ist mit einem Messinstrument 10 zur Anzeige des Abstandes der Trennscheibe 1 vom Sensor 7 verbunden. Berührungslos arbeitende Messsysteme dieser Art sind bekannt und sie arbeiten sehr genau, d.h. sie können Änderungen des Abstandes von einigen µm genau ermitteln und anzeigen. Die Düse 8 ist mit Aussengewinde versehen und kann bei gelöster Verbindung mit dem Anschlussteil zur axialen Feineinstellung gedreht und dann mittels der Schraube 8' festgesetzt werden. Auch der Sensor 7 kann axial einstellbar sein.

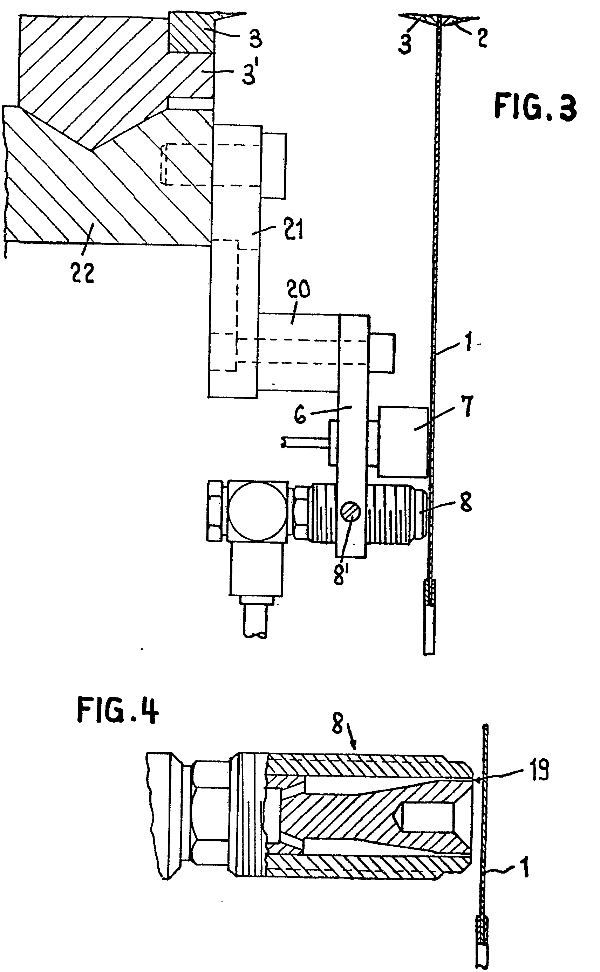

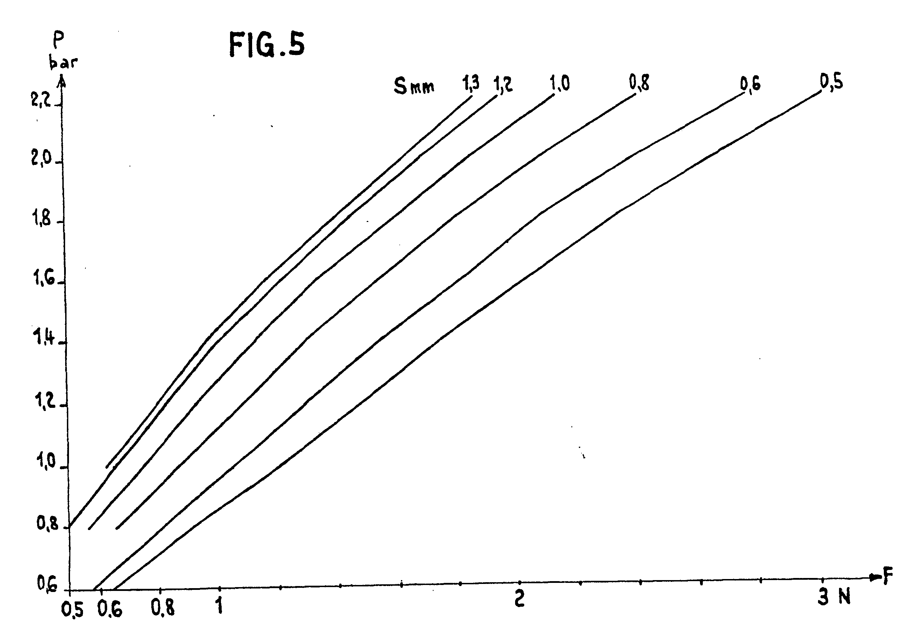

Die Trennmaschine weist eine Druckluftversorgung auf, wobei die eintretende Druckluft über einen Filter 11, einen ersten Druckregler 12 und über eine Leitung 13 Steuer- und Antriebselementen für Maschinenfunktionen zugeführt wird. Ein Manometer 14 zeigt diesen Luftdruck an. An diese Druckluftversorgung ist ein weiterer, hochpräziser Druckregler 16 angeschlossen, und der Betriebsdruck kann an einem Manometer 17 abgelesen und durch Einstellen des Druckreglers 16 auf einen bestimmten gewünschten Wert gebracht werden. Über ein Elektroventil 18 kann dieser Druck der Düse 8 zugeleitet werden. Die hochpräzise Regelung des Druckes bietet Gewähr für konstante Strömungsverhältnisse in der Düse und eine entsprechend konstante Druckwirkung dieser Düse auf die Trennscheibe 1. Figur 4 zeigt eine vergrösserte Ansicht, teilweise im Schnitt der Düse. Es handelt sich um eine Ringdüse. Die ringförmige Austrittsöffnung 19 weist beispielsweise einen Durchmesser von 10 mm und eine Weite von 0,2 mm auf. Ihr Abstand von der Trennscheibe 1 beträgt 0,5 bis 1,2 mm, vorzugsweise 0,5 bis 0,7 mm. Figur 5 zeigt die Kraft F, welche die aus der Düse ausströmende Luft auf die Trennscheibe 1 ausübt in Funktion des der Düse zugeführten Druckes P und des Abstandes S der Düse von der Trennscheibe. Die verfügbaren Druck- und Abstandbereiche erlauben eine genügend genau lokal definierte Druckeinwirkung im Bereich von etwa 0,5 bis 3 N. Man erreicht damit seitliche Auslenkungen der rotierenden Trennscheibe von 5 bis 25 µm, arbeitet aber vorzugsweise im Bereich von 15 bis 20 µm.

Figur 3 zeigt die besondere Aufhängung des Sensors 7 und der Düse 8 an einem gemeinsamen Arm 6 eines scherenartigen Gestänges. Der Arm 6 ist über ein Gelenk 20 mit einem weiteren Arm 21 verbunden, welcher seinerseits mit einem Teil 22 des Maschinengestells verschraubt ist. Im Betriebszustand ist das Scherengestänge durch Festziehen der Schraubenverbindungen starr und bestimmt die Positionen des Sensors 7 und der Düse 8 bezüglich der Trennscheibe 1 sehr genau. Das Gestänge gestattet jedoch eine anfängliche genaue Einstellung, bzw. spätere Anpassung der Position bei gelockerten Schraubverbindungen. Es ist daher möglich, die Vorrichtung mit Trennmaschinen, bzw. Trennscheiben verschiedener Abmessungen zu benützen. Die Arbeitsweise der beschriebenen Vorrichtung ist folgende: In periodischen Abständen, die von der Maschine her, beispielsweise über einem Zähler der Anzahl ausgeführter Schnitte, automatisch bestimmt sein können, wird das Elektroventil 18 erregt und umgestellt, so dass Druckluft über den Druckregler 16 mit genau bestimmtem Druck der Düse 8 zugeführt wird. Es wird damit auf die rotierende Trennscheibe 1 ein bestimmter seitlicher Druck ausgeübt, welcher diese Scheibe seitlich auslenkt. Der Sensor 7 erfasst diese Auslenkung, und das Instrument 10 zeigt entweder die Auslenkung oder direkt ein Mass für die Vorspannung in der Trennscheibe 1 an. Wird eine ungenügende Vorspannung ermittelt, kann eine entsprechende optische und/oder akustische Anzeige ausgelöst werden, womit das Bedienungspersonal weiss, dass bei nächster Gelegenheit die Trennscheibe nachzuspannen, gegebenenfalls auszuwechseln ist. Es kann dabei auch eine automatische Blokkierung erfolgen, welche die Einleitung eines weiteren Trennzyklus verhindert. Mit einer solchen automatischen Überwachung ist der grosse Vorteil verbunden, dass man in keiner Weise mehr auf Erfahrungswerte und Messungen bei Stillstand der Maschine angewiesen ist, sondern, dass man sich darauf verlassen kann, dass beim Abfallen der Trennscheibenvorspannung unter einen gegebenen Grenzwert automatisch eine Anzeige, bzw. ein Stillsetzen der Maschine innert geeigneter Frist stattfindet.

Figur 6 zeigt eine Ausführungsvariante. Die auf die Trennscheibe 1 wirkende Querkraft wird mittels eines Topfmagneten 23 erzeugt, dessen Wicklung 24 über ein Kabel 25 erregt wird. Konzentrisch zur Wicklung 24 ist eine Messspule 26, beispielsweise eines Hochfrequenz-Wirbelstrommessystems angeordnet, die über ein Kabel 27 mit der Messvorrichtung 9 verbunden ist. In ähnlicher Weise könnte ein Sensor im Zentrum der Düse 8 eingebaut sein.

Figur 7 zeigt eine weitere Ausführungsvariante, in welcher entsprechende Teile gleich bezeichnet sind wie in Figur 1. Die Druckluft gelangt in diesem Falle vom Druckregler nicht direkt zur Düse 8, sondern über eine Messvorrichtung 28, vorzugsweise eine pneumatische Brücke.

Ein zusätzliches Manometer 29 zeigt den Messwert an. Bei dieser Anordnung ist nun der Druck an der Düse 8 abhängig von der ausströmenden Luftmenge, und diese Luftmenge ist wiederum abhängig vom Abstand der Düse von der Trennscheibe 1. Pneumatische Systeme dieser Art zur Messung des Abstandes sind bekannt. Der Druck an der Düse 8 wird also umsomehr abfallen, je mehr die Trennscheibe unter der Wirkung der aus der Düse 8 austretenden Luft seitlich ausgelenkt wird. Der angezeigte Messwert kann somit als Mass für die Vorspannung der Trennscheibe dienen, wobei die entsprechenden Werte durch Eichung ermittelt werden können.

Die Ausführungen nach Figuren 6 und 7 bringen den Vorteil, dass die Auslenkung der Trennscheibe direkt am Ort der Krafteinwirkung gemessen wird. Es sind aber auch alle weiteren denkbaren Varianten möglich. So kann selbstverständlich bei Einwirkung auf die Trennscheibe mittels eines Magneten der Sensor seitlich des Magneten und nicht konzentrisch in demselben angeordnet sein.

Die Krafteinwirkung und Messung erfolgt natürlich am besten so nahe als möglich am inneren, nicht eingespannten Rand der Trennscheibe, wo die Auslenkung unter einer bestimmten Kraft am grössten ist. Es werden also vorzugsweise sowohl die Düse oder der Magnet als auch der Sensor nahe am inneren Scheibenrand angeordnet, was bedeutet, dass diese beiden Elemente im Umfangsrichtung nebeneinander angerodnet werden, wie Figur 2 zeigt.

Die periodische Erfassung der Vorspannung der Trennscheibe erlaubt bei allen auftretenden Mängeln des Schnittvorganges eine Vorentscheidung darüber, ob die Scheibenspannung die Ursache sei. Wenn die Vorspannung noch genügt, könnte z.B. eine Regeneration der Trennscheibe durchgeführt werden.

Aus Figur 2 ist ersichtlich, dass sich der Sensor 7 relativ nahe bei der Schnittstelle am Werkstück 4 befindet. Es ist damit möglich, während des Schnittvorganges bei unwirksamer Düse 8 die Verformung der Trennscheibe 1 unter den Schnittkräften zu überprüfen. Diese dauernde oder periodische Überprüfung trägt zu einer wirkungsvollen Überwachung und einer weitgehenden Diagnose der Ursache von Mängeln bei.

**Patentansprüche**

1. Verfahren zur Überprüfung der Vorspannung einer Innentrennscheibe (1), wobei quer zur Scheibenebene eine Kraft ausgeübt und die Auslenkung der Innentrennscheibe gemessen wird, dadurch gekennzeichnet, dass die Kraft berührungslos ausgeübt und die Auslenkung berührungslos gemessen wird, derart, dass die Überprüfung bei rotierender Innentrennscheibe erfolgen kann.

2. Verfahren nach Anspruch 1, dadurch gekennzeichnet, dass man eine vorgegebene Kraft ausübt und aus dem Mass der Auslenkung auf die Vorspannung schliesst.

3. Verfahren nach Anspruch 1 oder 2, dadurch gekennzeichnet, dass man die Kraft mittels eines gegen die Innentrennscheibe strömenden Mediums erzeugt.

4. Verfahren nach Anspruch 3, dadurch gekennzeichnet, dass das Medium durch eine pneumatische Messvorrichtung (28) zugeführt wird, und dass der Druck an der Düse (8) als Mass für die Vorspannung erfasst wird.

5. Verfahren nach Anspruch 1 oder 2, dadurch gekennzeichnet, dass die Kraft mittels eines Magneten (23, 24) angelegt wird.

6. Verfahren nach einem der Ansprüche 1 bis 5, dadurch gekennzeichnet, dass man in Umfangsrichtung nebeneinander die Kraft ausübt und die Auslenkung misst.

7. Verfahren nach einem der Ansprüche 1 bis 6, dadurch gekennzeichnet, dass mit einer Kraft von 0,5 bis 3 N eingewirkt wird.

8. Verfahren nach einem der Ansprüche 1 bis 7, dadurch gekennzeichnet, dass man beim Auftreten von Mängeln des Schnittvorganges entweder die Innentrennscheibe nachspannt, bzw. auswechselt oder aber eine Regeneration der Innentrennscheibe vornimmt, je nachdem, ob die ermittelte Vorspannung der Innentrennscheibe unter oder über einem definierten Grenzwert liegt.

9. Vorrichtung zur Durchführung des Verfahrens nach Anspruch 1, mit einem ortsfest angeordneten Mittel (8) zum berührungslosen Anlegen einer Kraft an die Innentrennscheibe (1) quer zu deren Ebene und mit einem ortsfest angeordneten Mittel (7) zum Erfassen der Auslenkung der Innentrennscheibe (1) unter der Einwirkung der obenerwähnten Kraft, gekennzeichnet durch Mittel (9, 10) zur Überprüfung der Vorspannung der Innentrennscheibe (1) anhand der erfassten Auslenkung.

10. Vorrichtung nach Anspruch 9, dadurch gekennzeichnet, dass die erwähnten Mittel (8; 7, 9, 10) an einem Scherengestänge (6, 20–22) angebracht sind, welches eine Einstellung gemäss den Abmessungen der Innentrennscheibe (1) und der Trennmaschine erlaubt.

11. Vorrichtung nach Anspruch 9 oder 10, gekennzeichnet durch eine Ringdüse (8, 19) für ein gegen die Innentrennscheibe (1) zu leitendes Druckmedium.

12. Vorrichtung nach einem der Ansprüche 9 bis 11, dadurch gekennzeichnet, dass ein Sensor (7) der Messvorrichtung (7, 9, 10), z.B. nach dem Wirbelstrom-Messprinzip (26) arbeitend, im Zentrum der Ringdüse oder eines Topfmagneten (23, 24) angeordnet ist.

13. Vorrichtung nach einem der Ansprüche 9 bis 12, dadurch gekennzeichnet, dass die Mittel (8) zum Anlegen der Kraft und die Mittel (7) zum Erfassen der Auslenkung der Trennscheibe (1) auf ein und derselben Seite der Innentrennscheibe angeordnet sind.

14. Vorrichtung nach einem der Ansprüche 9 bis 11, dadurch gekennzeichnet, dass die Mittel (8) zum Anlegen der Kraft und die Mittel (7) zum Erfassen der Auslenkung der Innentrennscheibe (1) auf entgegengesetzten Seiten der Innentrennscheibe angeordnet sind.

**Revendications**

1. Procédé pour tester la tension initiale dans un disque tronçonneur annulaire (1), une force étant appliquée perpendiculairement au plan du disque et la déformation du disque est mesurée, caractérisé en ce que la force est appliquée sans contact et la déformation est mesurée sans contact, de manière que le test puisse être fait avec le disque tronçonneur en rotation.

2. Procédé selon la revendication 1, caractérisé en ce que l'on exerce une force prédéterminée et que la déformation est prise comme mesure de la tension initiale.

3. Procédé selon la revendication 1 ou 2, caractérisé en ce que la force est produite à l'aide d'un jet de fluide dirigé contre le disque tronçonneur.

4. Procédé selon la revendication 3, caractérisé en ce que le fluide est amené par un dispositif de mesure pneumatique (28) et en ce que la pression à la tuyère (8) est prise comme mesure de la tension initiale.

5. Procédé selon la revendication 1 ou 2, caractérisé en ce que la force est appliquée à l'aide d'un aimant (23, 24).

6. Procédé selon l'une des revendications 1 à 5, caractérisé en ce que l'on applique la force et que l'on mesure la déformation en des endroits adjacents dans la direction périphérique.

7. Procédé selon l'une des revendications 1 à 6, caractérisé en ce qu'une force de 0,5 à 3 N est appliquée.

8. Procédé selon l'une des revendications 1 à 7, caractérisé en ce que lors de l'apparition de défauts du processus de tronçonnage, le disque tronçonneur est retendu ou remplacé si la tension initiale détectée dans le disque est en dessous d'une valeur limite définie et que le disque tronçonneur est regénéré si la tension initiale est en dessus de cette valeur limite.

9. Dispositif pour la mise en œuvre du procédé selon la revendication 1, avec des moyens (8) disposés de manière fixe pour appliquer une force au disque tronçonneur (1) perpendiculaire à son plan et avec des moyens (7) disposés de manière fixe pour détecter la déformation du disque tronçonneur (1) sous l'action de la force mentionnée plus haut, caractérisé par des moyens (9, 10) pour tester la tension initiale du disque tronçonneur (1) selon la déformation détectée.

10. Dispositif selon la revendication 9, caractérisé en ce que les moyens mentionnes (8; 7, 9, 10) sont montés à un bras (6, 20–22) qui permet un réglage selon les dimensions du disque tronçonneur (1) et de la machine à tronçonneur.

11. Dispositif selon la revendication 9, ou 10, caractérisé par une tuyère annulaire pour appliquer un fluide sous pression contre le disque tronçonneur (1).

12. Dispositif selon l'une des revendications 9 à 11, caractérisé en ce qu'un senseur (7) du dispositif de mesure (7, 9, 10) travaillant p.ex. selon le principe des courants de Foucault, (26) est disposé au centre de la tuyère annulaire ou d'un aimant-pot (23, 24).

13. Dispositif selon l'une des revendications 9 à 12, caractérisé en ce que les moyens (8) pour appliquer la force et les moyens (7) pour détecter la déformation du disque tronçonneur sont disposés (7) d'un seul et même côté du dsique tronçonneur.

14. Dispositif selon l'une des revendications 9 à 11, caractérisé en ce que les moyens (8) pour appliquer la force et les moyens (7) pour détecter la déformation du disque tronçonneur (1) sont disposés sur des côtés opposés du disque tronçonneur.

**Claims**

1. In a method for testing the prestress of an annular cutting off wheel of a parting-off machine, wehreby a force is applied perpendicularly to the plane of the wheel and the deformation of the wheel is measured, characterized in that the force is applied contactless and the deformation is measured contactless, the testing being effected with the cutting blade in rotation.

2. A method according to claim 1, characterized in that a predetermined force is applied and the deformation is taken as a measure for the prestress in the wheel.

3. A method according to claim 1 or 2, characterized in that the force is generated by means of a fluid jet directed against the cutting wheel.

4. A method according to claim 3, characterized in that the fluid is fed through a pneumatic measuring device (28) and that the pressure at the nozzle (8) is taken as a measure of the prestress.

5. A method according to claim 1 or 2, characterized in that the force is applied by means of a magnet (23, 24).

6. A method according to one of the claims 1 to 5, characterized in that one applies the force and measures the deformation at adjacent places in the peripheral direction.

7. A method according to one of the claims 1 to 6, characterized in that a force of .5 to 3 N is applied.

8. A method according to one of the claims 1 to 7, characterized in that upon detection of defects of the cutting operation the cutting wheel is tensioned or replaced if the detected prestress in the wheel is below a defined limit value, and the cutting wheel is regenerated if the prestress is above said limit value.

9. A device for carrying out the method according to claim 1, with fixed means (8) for applying a force to the cutting wheel (1) in a direction perpendicular to its plane without contacting the wheel, and with fixed means (7) for detecting the deformation of the wheel (1) under the action of the force mentioned above, characterized by means (9, 10) for testing the prestress of the wheel (1) from the detected deformation.

10. A device according to claim 9, characterized in that said means (8; 7, 9, 10) are provided to an arm (6, 20–22) which permits an adjustment according to the dimensions of the cutting wheel (1) and of the partingoff machine.

11. A device according to claim 9 or 10, characterized in that it comprises an annular nozzle (8, 19) for applying pressure fluid against the cutting wheel (1).

12. A device according to one of the claims 9 to 11, characterized in that a sensor (7) of the measuring device (7, 9, 10) working e.g. on the principle of eddy-current measurement (26) is located in the center of the annular nozzle or of a pot magnet (23, 24).

13. A defice according to one of the claims 9 to 12, characterized in that the means (8) for applying a force and the means (7) for detecting the deformation of the wheel (1) are located on the same side of the cutting wheel.

14. A device according to one of the claims 9 to 11, characterized in that the means (8) for applying the force and the means (7) for detecting the deformation of the cutting wheel (1) are located on opposite sides of the cutting wheel.

FIG.1

FIG.2

FIG.6

FIG.7

0 139 067

2/3

FIG.3

3
3'

22
21
20
6
7
8
8'

1
3
2

FIG.4

8
19
1

FIG.5